# EUROPEAN PATENT APPLICATION

(11) **EP 3 745 232 A1**
(43) Date of publication of application: **02.12.2020**
(21) Application number: 18902412.8
(22) Date of filing: 31.10.2018
(51) Int. Cl.: G05D 1/02, A01B 69/00, G01S 5/14

(54) **AUTOMATIC TRAVEL SYSTEM**

(30) Priority: 26.01.2018 JP 2018011542
(71) Applicant: Yanmar Power Technology Co., Ltd., Osaka-shi Osaka 530-0013 (JP)
(72) Inventor: AOKI, Hideaki, Osaka-shi, Osaka 530-0013 (JP); SUZUKI, Akihiro, Osaka-shi, Osaka 530-0013 (JP)
(74) Representative: Dennemeyer & Associates S.A.
(86) International application number: PCT/JP2018/040542
(87) International publication number: WO 2019/146202

(57) **Abstract**

Provided is an automatic travel system including a plurality of wireless information tags 2 installed at prescribed positions, a vehicle-side communication part included in an automated vehicle 1, for carrying out communication with the plurality of wireless information tags 2, a relative position detection part for, in accordance with the communication between the wireless information tags 2 and the vehicle-side communication part, acquiring orientations to the wireless information tags 2 and distances to the wireless information tags 2 and detecting a relative position in relation to the wireless information tags 2, and a travel control part for controlling the travel of the automated vehicle 1 on the basis of the relative position detected by the relative position detection part.

## Description

### TECHNICAL FIELD

The present invention relates to an automatic travel system enabling an automated vehicle to travel automatically.

### BACKGROUND ART

In the automatic travel system as mentioned above, a working vehicle, such as a tractor or a rice transplanter, is provided as an automated vehicle, and a target traveling route for allowing the working vehicle to travel automatically is set in advance in a traveling region such as a farm field. Traveling of the working vehicle is controlled in such a way that the current position of the working vehicle is allowed to be acquired by mounting of a satellite positioning system to the working vehicle, etc., and the working vehicle is enabled to automatically travel along the target traveling route, on the basis of the current position of the working vehicle which has been acquired (for example, see Patent Literature 1).

### CITATION LIST

### Patent Literature

Patent Literature 1: Japanese Unexamined Patent Application Publication No. 2008-92818

### DISCLOSURE OF INVENTION

### PROBLEMS TO BE SOLVED BY THE INVENTION

In a system described in Patent Literature 1, it is necessary to set a target traveling route in advance, and also provide a costly satellite positioning system. Consequently, the structure becomes complicated and the cost is increased.

In view of the circumstances, the main object of the present invention is to provide an automatic travel system whereby the automated vehicle can be made to travel automatically while simplifying the structure and reducing the cost.

### MEANS FOR SOLVING THE PROBLEMS

The first characteristic configuration of the present invention is featured in that the present invention is provided with a plurality of wireless information tags arranged at predetermined positions, a vehicle-side communication portion provided in an automated vehicle and configured to perform communication with the plurality of wireless information tags, a relative position detecting portion configured to acquire an orientation to a wireless information tag and a distance to the wireless information tag by communication between the wireless information tag and the vehicle-side communication portion, and detect a relative position with respect to the wireless information tag, and a travel control portion configured to control traveling of the automated vehicle, on the basis of the relative position detected by the relative position detecting portion.

According to the present configuration, the relative position detecting portion can detect the relative position of the automated vehicle with respect to the wireless information tag by communication between the wireless information tag and the vehicle-side communication portion. Therefore, by arranging the wireless information tags to correspond to a travel location where the automated vehicle is to travel automatically, the relative position, which is detected by the relative position detecting portion, of the automated vehicle with respect to each of the wireless information tags can be made to correspond to the travel location where the automated vehicle is to travel automatically. By virtue of the above feature, the travel control portion can identify the travel location where the automated vehicle is to travel automatically by using the relative position, which is detected by the relative position detecting portion, of the automated vehicle with respect to the wireless information tag and can control the traveling of the automated vehicle such that the automated vehicle travels through the identified travel location. As a result, there is no need to set a target traveling route in advance, and there is also no need to provide a costly satellite positioning system. Thus, it is possible to make the automated vehicle travel automatically while simplifying the structure and reducing the cost.

The second characteristic configuration of the present invention is featured in that the plurality of wireless information tags include a pair of wireless information tags for travel location identification, which are arranged at an interval in a lateral direction with respect to a traveling direction of the automated vehicle, the relative position detecting portion detects the relative position with respect to each of the pair of wireless information tags for travel location identification, and the travel control portion controls the traveling of the automated vehicle to cause the automated vehicle to travel between the pair of wireless information tags for travel location identification, on the basis of the relative position detected by the relative position detecting portion with respect to each of the pair of wireless information tags for travel location identification.

According to the present configuration, the wireless information tags for travel location identification are arranged in a pair in the left-right direction with respect to the travel location where the automated vehicle is to travel automatically. By doing so, the relative position, which is detected by the relative position detecting portion, of the automated vehicle with respect to each of the pair of wireless information tags for travel location identification is set to a position corresponding to the travel location. By virtue of the above feature, the travel control portion can identify the travel location between the pair of wireless information tags for travel location identification, by using the relative position, which is detected by the relative position detecting portion, of the automated vehicle with respect to each of the pair of wireless information tags for travel location identification and can control the traveling of the automated vehicle such that the automated vehicle travels through the identified travel location. Accordingly, the travel control portion can make the automated vehicle automatically travel appropriately while accurately identifying the travel location between the pair of wireless information tags for travel location identification.

The third characteristic configuration of the present invention is featured in that the travel control portion controls the traveling of the automated vehicle in accordance with a relationship between a distance to one wireless information tag for travel location identification and a distance to another wireless information tag for travel location identification out of the pair of wireless information tags for travel location identification, to cause the automated vehicle to travel between the pair of wireless information tags for travel location identification.

According to the present configuration, the travel control portion performs simple control of controlling the traveling of the automated vehicle in accordance with the relationship between the distance to the wireless information tag for travel location identification of the pair on one side and the distance to the other wireless information tag for travel location identification of the pair on the other side. By doing so, it is possible to make the automated vehicle travel automatically through the travel location between the pair of wireless information tags for travel location identification. Consequently, it is possible to make the automated vehicle travel automatically while simplifying the structure.

The fourth characteristic configuration of the present invention is featured in that the plurality of wireless information tags include a wireless information tag for obstacle, in which a relative position of an obstacle with respect to the wireless information tag is stored as obstacle information, and the travel control portion controls the traveling of the automated vehicle to cause the automated vehicle to avoid the obstacle, on the basis of the obstacle information which is acquired by communication between the wireless information tag for obstacle and the vehicle-side communication portion.

According to the present configuration, in the wireless information tag for obstacle, the obstacle information indicating the relative position of the obstacle with respect to the wireless information tag is stored. Therefore, by acquiring the obstacle information by communication between the wireless information tag for obstacle and the vehicle-side communication portion, the travel control portion can ascertain the relative position of the obstacle with respect to the wireless information tag for obstacle, in addition to the relative position, which is detected by the relative position detecting portion, of the automated vehicle with respect to the wireless information tag for obstacle. By virtue of the above feature, the travel control portion can identify the relative position of the automated vehicle with the arrangement position of the wireless information tag for obstacle being used as a reference, and the relative position of the obstacle with respect to the automated vehicle by using the relative position of the obstacle, and can control the traveling of the automated vehicle so as to avoid the identified obstacle. Accordingly, even if there exists an obstacle within a traveling region where traveling is to be performed, the automated vehicle can be made to travel automatically in such a manner as to avoid the obstacle.

The fifth characteristic configuration of the present invention is featured in that the plurality of wireless information tags include a wireless information tag for turning storing turn information for making the automated vehicle turn and travel, and the travel control portion controls the traveling of the automated vehicle, on the basis of the turn information which is acquired by communication between the wireless information tag for turning and the communication portion, to cause the automated vehicle to perform turning traveling.

According to the present configuration, since the turn information to make the automated vehicle turn and travel is stored in the wireless information tag for turning, the travel control portion can acquire the turn information by communication between the wireless information tag for turning and the vehicle-side communication portion. The turn information is information indicating various traveling conditions, etc., for making the automated vehicle turn and travel, such as at what position the turning traveling is to be performed with respect to the wireless information tag for turning, and in which direction the turning traveling is to be performed with respect to the wireless information tag for turning. By virtue of the above feature, by acquiring the turn information, the travel control portion can make the automated vehicle turn and travel easily, in accordance with the various traveling conditions indicated by the turn information. Moreover, not only can the automated vehicle be made to travel forward, but the automated vehicle can also be made to turn and travel in a traveling region where traveling is to be performed. Thus, it is possible to make the automated vehicle travel efficiently in the traveling region to improve the working efficiency.

The sixth characteristic configuration of the present invention is featured in that the plurality of wireless information tags include a wireless information tag for position feature storing position feature information regarding an arrangement position of the wireless information tag itself.

According to the present configuration, the vehicle-side communication portion performs communication with the wireless information tag, thereby, it is possible to acquire the position feature information regarding the arrangement position of the wireless information tag in question. Here, the position feature information is information indicating what position the arrangement position of the wireless information tag corresponds to on the route along which the automated vehicle is made to travel, for example. For example, the position feature information can be assumed as information indicating that the position corresponds to a center portion of the route along which the automated vehicle is made to travel linearly, or information indicating that the position corresponds to a start point where the automated vehicle is made to turn and travel. Consequently, the travel control portion can make the automated vehicle travel automatically while ascertaining the exact arrangement position of the wireless information tag with which wireless communication is being performed from the position feature information. Accordingly, the automatic traveling can be performed efficiently.

### BRIEF DESCRIPTION OF DRAWINGS

FIG. 1 is a plan view illustrating an automated vehicle and a plurality of wireless information tags in a traveling region where automatic traveling is to be performed.
FIG. 2 is a control block diagram of an automatic travel system.
FIG. 3 is a diagram illustrating an arrangement structure of wireless information tags.
FIG. 4 is a descriptive diagram for description how the automated vehicle is made to travel automatically.
FIG. 5 is another descriptive diagram for how the automated vehicle is made to travel automatically.
FIG. 6 is a descriptive diagram for description how the automated vehicle is made to turn and travel.
FIG. 7 is a diagram illustrating obstacle information.
FIG. 8 is a descriptive diagram for description how the automated vehicle is made to travel automatically while avoiding an obstacle.
FIG. 9 is a diagram illustrating the obstacle information.
FIG. 10 is a view illustrating travel disabled areas.
FIG. 11 is a schematic diagram illustrating information stored in a tag-side storage portion.

### DESCRIPTION OF EMBODIMENTS

An embodiment of an automatic travel system according to the present invention will be described with reference to the drawings.

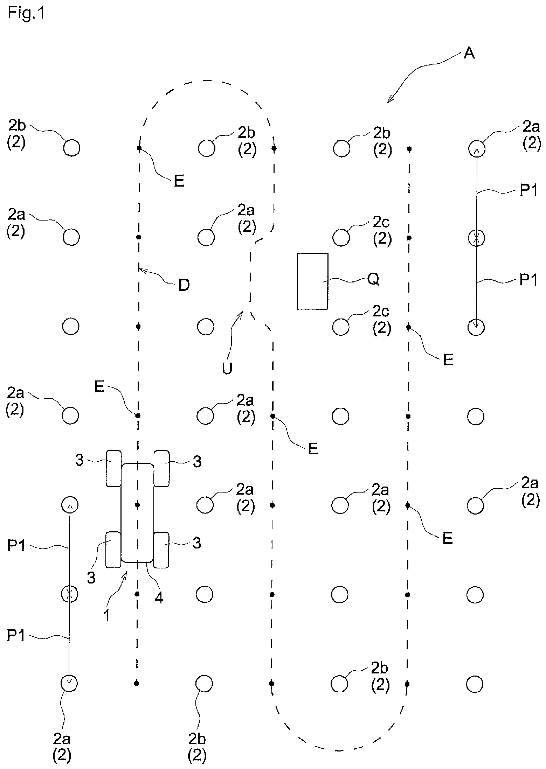

The automatic travel system is applied, for example, to orchards in which fruit-bearing trees are cultivated, and greenhouse facilities in which various crops are cultivated inside a greenhouse. By making an automated vehicle 1 travel automatically, spraying work of spraying pesticides, fertilizers, and herbicides, and harvesting work or the like, are performed. As illustrated in FIG. 1, the automatic travel system assumes an area within the orchard or greenhouse as a traveling region A where automatic traveling is to be performed. In order to allow the automated vehicle 1 to travel automatically within the traveling region A, a plurality of wireless information tags 2 that are arranged at predetermined positions are provided. Also, the traveling region A of the automated vehicle 1 can be assumed as not only an outside area but also an indoor area, such as within a building.

In FIG. 1, although not illustrated in the drawing, a plurality of fruit-bearing trees or crops are cultivated in a line along an up-down direction in the drawing, and a plurality of cultivated lines of fruits and crops are provided at intervals in a left-right direction in the drawing. Further, the plurality of wireless information tags 2 are arranged to overlap the plurality of cultivated lines, and each of the wireless information tags 2 is installed by using a space or the like between the fruit-bearing trees or crops.

As the automated vehicle 1, for example, working vehicles such as a spray working vehicle for spraying pesticides, fertilizers and herbicides, and a harvest working vehicle can be used. However, various working vehicles other than the above can also be applied. The automated vehicle 1 is provided with a travel portion 3 including a plurality of wheels, and a car body portion 4 supported by the travel portion 3. Although not illustrated in the drawing, when the automated vehicle 1 is a spray working vehicle, various devices, such as a spraying device, are provided on the car body portion 4. When the automated vehicle 1 is a harvest working vehicle, various devices, such as a harvesting device, are provided on the car body portion 4.

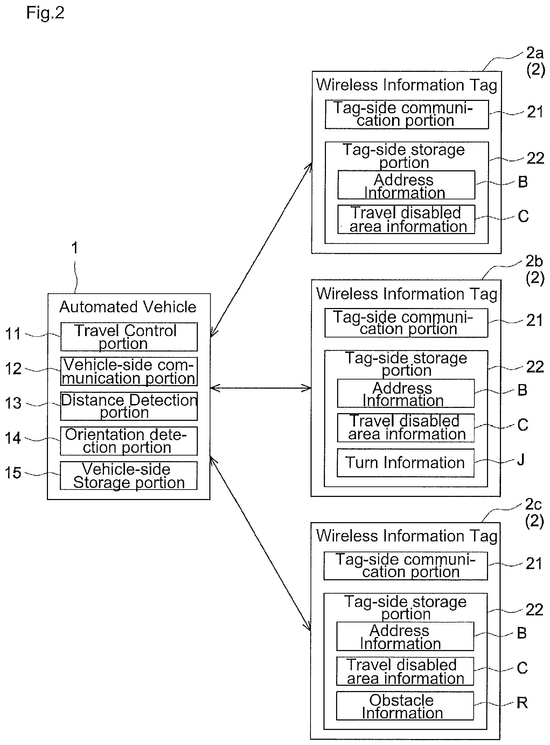

As illustrated in FIG. 2, the automated vehicle 1 is provided with a travel control portion 11 which controls traveling of the automated vehicle 1, a vehicle-side communication portion 12 which performs communication with the wireless information tag 2, a distance detecting portion 13 which detects a distance to the automated vehicle 1 relative to the wireless information tag 2 by communication between the wireless information tag 2 and the vehicle-side communication portion 12, an orientation detecting portion 14 which detects an orientation of the automated vehicle 1 relative to the wireless information tag 2 by communication between the wireless information tag 2 and the vehicle-side communication portion 12, and a vehicle-side storage portion 15 including a nonvolatile memory or the like storing various kinds of information. A relative position detecting portion is configured by including the distance detecting portion 13 and the orientation detecting portion 14.

The travel control portion 11 controls the travel portion 3 such that the traveling direction of the automated vehicle 1 is set to a desired traveling direction, and the vehicle speed is set to a desired vehicle speed, for example. The vehicle-side communication portion 12 includes an antenna, a reader, a writer, etc., and wirelessly communicates with the wireless information tag 2 by using radio waves of a predetermined frequency. In a method of detecting a distance by the distance detecting portion 13, and a method of detecting an orientation by the orientation detecting portion 14, a phase of a signal received from the wireless information tag 2 during movement of the automated vehicle 1, a position of the automated vehicle 1 at a timing when the inclination of a change in the phase is inverted, and a travel distance of the automated vehicle 1, for example, are used. By using the aforementioned features, a distance to the automated vehicle 1 relative to the wireless information tag 2, and an orientation of the automated vehicle 1 relative to the wireless information tag 2 are calculated. Since the above methods of detection are well-known technique, as disclosed in, for example, Japanese Patent No. 5987187, a detailed description thereof is omitted. Further, as the method of detecting a distance by the distance detecting portion 13, and the method of detecting an orientation by the orientation detecting portion 14, a detection method different from the well-known technique as disclosed in Japanese Patent No. 5987187 can be used.

As illustrated in FIG. 2, the wireless information tag 2 is provided with a tag-side communication portion 21 including an antenna, etc., for performing communication with the vehicle-side communication portion 12, and a tag-side storage portion 22 including a nonvolatile memory, etc., in which various kinds of information are stored. The wireless information tag 2 is configured as a passive type which operates on radio waves transmitted from the automated vehicle 1 as a source of energy, and does not have a battery. The communicable range of the wireless information tag 2 is, for example, within 3 to 5 meters.

The plurality of wireless information tags 2 are used to identify a travel location where the automated vehicle 1 is made to travel automatically in the traveling region A. The arrangement positions of the plurality of wireless information tags 2 are set to positions corresponding to the travel location where the automated vehicle 1 is made to travel automatically.

As illustrated by a dotted line in FIG. 1, FIG. 1 exemplifies the travel location (traveling route) where the automated vehicle 1 is made to travel reciprocatingly, which is achieved by a travel mode of allowing the automated vehicle 1 to travel linearly from one end side to the other end side in the up-down direction, reversing the traveling direction by making the automated vehicle 1 turn at the other end side in the up-down direction, and allowing the automated vehicle 1 to travel linearly from the other end side to the one end side in the up-down direction, being executed repetitively.

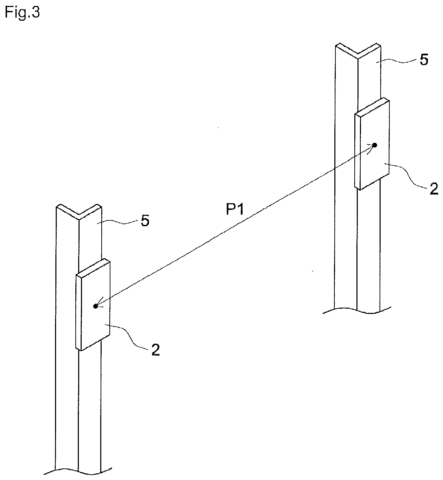

Therefore, in order to make the automated vehicle 1 travel in the up-down direction in FIG. 1, the arrangement positions of the plurality of wireless information tags 2 are set such that the wireless information tags 2 are aligned in the up-down direction in FIG. 1. At each of predetermined positions where the wireless information tags 2 are arranged, a support strut 5 extending in the vertical direction is disposed, as illustrated in FIG. 3, for example, and the wireless information tag 2 is attached to a vertical intermediate portion of the support strut 5. The wireless information tag 2 is fixed to the support strut 5 by using a fixing tool such as a double-sided adhesive tape, and is attached to the support strut 5 in such a state of being prevented from wobbling or moving. Incidentally, the wireless information tag 2 may be attached to the predetermined position in such a way that an accommodation case or the like, in which the wireless information tag 2 can be embedded and accommodated, is fixed to the support strut in advance, and the wireless information tag 2 is embedded and accommodated in the accommodation case.

When the automated vehicle 1 is made to travel automatically, as the automated vehicle 1 moves, wireless communication is carried out between the vehicle-side communication portion 12 and the tag-side communication portion 21, as illustrated in FIG. 2. As a result of the above wireless communication, the distance detecting portion 13 detects a distance to the automated vehicle 1 relative to the wireless information tag 2, and the orientation detecting portion 14 detects the orientation of the automated vehicle 1 relative to the wireless information tag 2. The travel control portion 11 can ascertain a relative position of the automated vehicle 1 with respect to the wireless information tag 2, on the basis of the distance to the automated vehicle 1 relative to the wireless information tag 2, which is detected by the distance detecting portion 13, and the orientation of the automated vehicle 1 relative to the wireless information tag 2, which is detected by the orientation detecting portion 14. Therefore, as a result of the travel location of the automated vehicle 1 being set in advance with reference to the arrangement positions of the wireless information tags 2, the travel control portion 11 identifies the travel location of the automated vehicle 1 which has been set in advance, and controls the traveling of the automated vehicle 1 such that the automated vehicle 1 travels through the identified travel location. A method for identifying the travel location of the automated vehicle 1, the automatic traveling of the automated vehicle 1 at that time, and the like, will be described later.

As illustrated in FIG. 1, the plurality of wireless information tags 2 include wireless information tags 2a for travel location identification, which are arranged in a pair, at an interval in a horizontal direction (left-right direction in FIG. 1) with respect to the traveling direction (up-down direction in FIG. 1) of the automated vehicle 1, and a wireless information tag 2b for turning, which stores turn information J to make the automated vehicle 1 turn and travel.

Left-and-right pairs of wireless information tags 2a for travel location identification are arranged in such a state that they are aligned to be spaced from each other at a first predetermined interval PI, in the traveling direction of the automated vehicle 1, to correspond to the travel location used to make the automated vehicle 1 travel from the one end side to the other end side or from the other end side to the one end side in the up-down direction in FIG. 1. For the first predetermined interval PI, a value smaller than that of the communicable range of the wireless information tag 2 is set. Moreover, the plurality of wireless information tags 2 are arranged such that the intervals between the left-and-right pairs of wireless information tags 2 are set to regular intervals also in the horizontal direction (left-right direction in FIG. 1), and a value smaller than that of the communicable range of the wireless information tag 2 is also set to the aforementioned interval. Consequently, when the automated vehicle 1 travels, wireless communication can be carried out between a total of four wireless information tags 2, i.e., each set of two wireless information tags 2 in at least the traveling direction and the left-right direction, and the vehicle-side communication portion 12 of the automated vehicle 1.

The wireless information tag 2b for turning is arranged to correspond to a position where the automated vehicle 1 is to be turned. In FIG. 1, the automated vehicle 1 is turned at the one end side and the other end side in the up-down direction in the drawing. Thus, among the plurality of wireless information tags 2, the wireless information tags 2 located at an upper edge portion and a lower edge portion in the up-down direction in the drawing correspond to the wireless information tags 2b for turning.

In the wireless information tag for travel location identification and the wireless information tag 2b for turning, address information B and travel disabled area information C are stored in the tag-side storage portion 22. Consequently, the automated vehicle 1 is configured such that the travel control portion 11 can acquire the address information B and the travel disabled area information C by communication between the vehicle-side communication portion 12 and the tag-side communication portion 21.

The address information B corresponds to information indicating the exact address of location regarding the arrangement position of the wireless information tag 2. For example, by assuming the arrangement position of the wireless information tag 2, which is located at the leftmost side and is at the lowermost side in FIG. 1, as "Address 1-1", and applying two coordinates with the above wireless information tag 2 being treated as a reference address, the address information B can be represented by two numbers. For example, the arrangement position of the wireless information tag 2, which is the second wireless information tag from the left and is located at the lowermost side, is assumed as "Address 2-1". The address information B can be set such that the first number is increased as the arrangement position of the wireless information tag 2 draws near to the right. Also, the arrangement position of the wireless information tag 2, which is located at the leftmost side and is the second wireless information tag from the bottom, is assumed as "Address 1-2". The address information B can be set such that the second number is increased as the arrangement position of the wireless information tag 2 draws near to the upper side. Therefore, the arrangement position of the wireless information tag 2, which is located at the rightmost side and is at the uppermost side, can be set to "Address 4-7". The address information B set as described above is stored in the tag-side storage portion 22 in each of the plurality of wireless information tags 2.

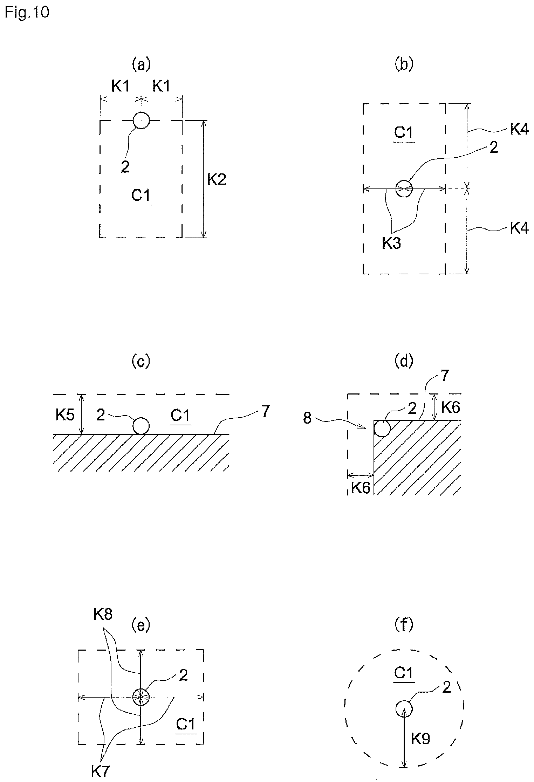

The travel disabled area information C corresponds to information indicating an area where the automated vehicle 1 is not permitted to travel. For example, if the automated vehicle 1 comes too close to the wireless information tag 2, there is a risk that the automated vehicle 1 may come into contact with the crops or the wireless information tag 2. Thus, as illustrated in FIG. 10, a range of area extending from the wireless information tag 2 by a predetermined distance is defined as a travel disabled area C1 (i.e., an area extending from the wireless information tag 2 to a dotted line in FIG. 10).

For the travel disabled area C1, what area to set can be changed in accordance with the arrangement position or the like of the wireless information tag 2. Therefore, the description will be added for the travel disabled area C1 with reference to FIG. 10.

FIG. 10 (a) illustrates a case where the wireless information tag 2 is arranged at an edge portion relative to the arrangement direction (up-down direction in FIG. 1) of the plurality of wireless information tags 2, such as in the case of the wireless information tag 2b for turning. FIG. 10 (b) illustrates a case where the wireless information tag 2 is arranged at an intermediate portion relative to the arrangement direction (up-down direction in FIG. 1) of the plurality of wireless information tags 2, such as in the case of the wireless information tag 2a for travel location identification. In FIG. 10 (a), a case where the wireless information tag 2 is arranged at an upper edge portion relative to the arrangement direction (up-down direction in FIG. 1) of the plurality of wireless information tags 2 is illustrated. A range of area extending from the arrangement position of the wireless information tag 2 to both sides in the left-right direction by a first predetermined distance K1, and also extending from the arrangement position of the wireless information tag 2 to the lower side in the up-down direction by a second predetermined distance K2 is set as the travel disabled area C1. In FIG. 10 (b), a range of area extending from the arrangement position of the wireless information tag 2 to both sides in the left-right direction by a third predetermined distance K3, and also extending from the arrangement position of the wireless information tag 2 to both sides in the up-down direction by a fourth predetermined distance K4 is set as the travel disabled area C1.

FIG. 10 (c) illustrates a case where the wireless information tag 2 is arranged on, for example, a wall portion 7, although this is not illustrated in FIG. 1. FIG. 10 (d) illustrates a case where the wireless information tag 2 is arranged at a corner portion 8 of the wall portion 7 or the like. In FIG. 10(c), a range of area extending from the wall portion 7 by a fifth predetermined distance K5 is set as the travel disabled area C1. Also in FIG. 10 (d), a range of area extending from the wall portion 7 by a sixth predetermined distance K6 is set as the travel disabled area C1, and the travel disabled area C1, which is in a bent shape according to the shape of the corner portion 8, is set.

As long as the travel disabled area C1 is an area to be set with reference to the arrangement position of the wireless information tag 2, what area is set as the travel disabled area C1 can be changed as appropriate. For example, as illustrated in FIG. 10 (e), a rectangular range of area extending from the arrangement position of the wireless information tag 2 to both sides in the left-right direction by a seventh predetermined distance K7, and also extending from the arrangement position of the wireless information tag 2 to both sides in the up-down direction by an eighth predetermined distance K can be set as the travel disabled area C1. As illustrated in FIG. 10 (f), a circular range of area in which a ninth predetermined distance K9 from the arrangement position of the wireless information tag 2 is the radius, with the arrangement position of the wireless information tag 2 being the center, can be set as the travel disabled area C1.

The address information B and the travel disabled area information C are set as described above. Therefore, when the automated vehicle 1 travels, by communication between the vehicle-side communication portion 12 and the tag-side communication portion 21, the travel control portion 11 acquires the address information B and the travel disabled area information C. Thereby, the travel control portion 11 controls the traveling of the automated vehicle 1 such that the automated vehicle 1 does not travel through the travel disabled area C1 while ascertaining the address information B of the wireless information tag 2 with which wireless communication is being performed.

The travel control portion 11 acquires the address information B by communication between the vehicle-side communication portion 12 and the tag-side communication portion 21. Therefore, the travel control portion 11 understands with which wireless information tag 2, in terms of the address where the wireless information tag 2 is located, the communication is being performed. Thus, when there exists a wireless information tag 2 incapable of performing communication due to trouble or the like along the way during automatic traveling of the automated vehicle 1, the travel control portion 11 can identify the address of location of the wireless information tag 2 in question, and is enabled to specify which wireless information tag 2, among the plurality of wireless information tags 2, has the trouble. Moreover, when there exists a wireless information tag 2 incapable of performing communication due to trouble or the like along the way during automatic traveling of the automated vehicle 1, the travel control portion 11 causes, for example, the automatic traveling of the automated vehicle 1 to stop.

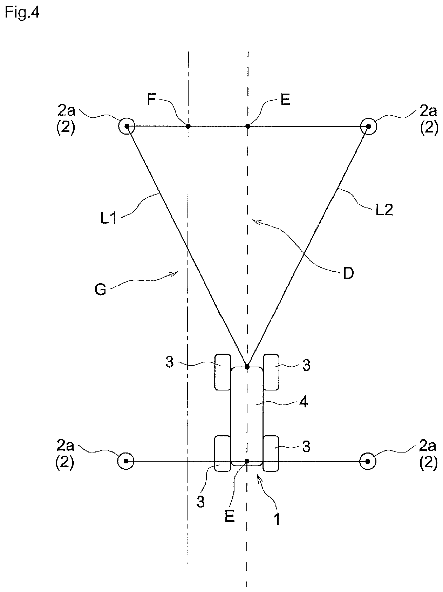

Hereinafter, with reference to FIG. 4, a method for identifying the travel location using the wireless information tag 2 for travel location identification, and the automatic traveling of the automated vehicle 1 at that time will be described.

The wireless information tags 2a for travel location identification are arranged in pairs in the left-right direction with respect to the traveling direction of the automated vehicle 1. Therefore, when the automated vehicle 1 travels, as well as the wireless communication being carried out between the vehicle-side communication portion 12 and the tag-side communication portion 21 of the wireless information tag 2a for travel location identification located on the left side, the wireless communication is carried out between the vehicle-side communication portion 12 and the tag-side communication portion 21 of the wireless information tag 2a for travel location identification located on the right side. Further, the wireless communication is carried out repeatedly between the vehicle-side communication portion 12 and the tag-side communication portion 21 each time a set period elapses. Although the set period can be set by time, the set period can alternatively be set using the conditions other than time, such as each time the automated vehicle 1 moves by a set distance.

As described above, when the wireless communication is carried out between the vehicle-side communication portion 12 and the tag-side communication portion 21, the distance detecting portion 13 detects a first distance L1 to the automated vehicle 1 relative to the wireless information tag 2a for travel location identification which is located on the left side, and a second distance L2 to the automated vehicle 1 relative to the wireless information tag 2a for travel location identification which is located on the right side, each time the set period elapses. In addition, each time the set period elapses, the orientation detecting portion 14 detects the orientation of the automated vehicle 1 relative to the wireless information tag 2a for travel location identification which is located on the left side, and the orientation of the automated vehicle 1 relative to the wireless information tag 2a for travel location identification which is located on the right side, each time the set period elapses. The travel control portion 11 acknowledges the first distance L1 and the second distance L2 by way of the detection by the distance detecting portion 13, and also acknowledges the orientation of the automated vehicle 1 relative to the wireless information tags 2a for travel location identification on both left and right sides by way of the detection by the orientation detecting portion 14. Thereby, the travel control portion 11 ascertains a relative position of the automated vehicle 1 with respect to the wireless information tags 2a for travel location identification on both left and right sides.

The travel location of the automated vehicle 1 is set in advance with reference to the arrangement positions of the wireless information tags 2a for travel location identification. For example, as illustrated by a dotted line in FIG. 4, the travel location of the automated vehicle 1 is set to a linear travel location (traveling route) D, which passes through a center point E between the wireless information tag 2a for travel location identification which is located on the left side and the wireless information tag 2a for travel location identification which is located on the right side. The travel location of the automated vehicle 1 is set to an area other than the travel disabled area C1, which is set by the travel disabled area information C stored in each of the wireless information tags 2. The travel control portion 11 is in possession of setting information for the travel location of the automated vehicle 1 in advance, and controls the traveling of the automated vehicle 1 by using the setting information for the travel location of the automated vehicle 1.

The travel control portion 11 is aware of the relative position of the automated vehicle 1 with respect to the wireless information tags 2a for travel location identification on both left and right sides. Therefore, by identifying the center point E from the relative position, the travel control portion 11 identifies the travel location (traveling route) D. By controlling the travel portion 3 in accordance with the relationship between the first distance L1 and the second distance L2 such that a difference in speed according to the aforementioned relationship is generated between the left and right wheels, the travel control portion 11 controls the traveling of the automated vehicle 1 so that the automated vehicle 1 travels through the travel location D. Incidentally, the relationship between the first distance L1 and the second distance L2 can be assumed as, for example, the ratio between the first distance L1 and the second distance L2 or a difference between the first distance L1 and the second distance L2.

For example, when the first distance L1 is smaller than the second distance L2, the automated vehicle 1 is located on a side closer to the wireless information tag 2a for travel location identification on the left than the travel location D. Therefore, the travel control portion 11 controls the travel portion 3 such that a difference in speed according to the relationship between the first distance L1 and the second distance L2 is generated between the left and right wheels, with a mode of allowing the speed of the left wheel to be higher than the speed of the right wheel. Consequently, it is possible to have the automated vehicle 1 travel in such a way that it approximates the travel location D, and the automated vehicle 1 can be made to automatically travel through the travel location D.

As described above, the distance detection by the distance detecting portion 13 and the orientation detection by the orientation detecting portion 14 are performed repeatedly each time the wireless communication between the vehicle-side communication portion 12 and the tag-side communication portion 21 is carried out after the elapse of the set period. Accordingly, even if the automated vehicle 1 deviates from the travel location D, the travel control portion 11 is to control the traveling of the automated vehicle 1 so that the automated vehicle 1 approximates the travel location D each time the set period elapses, and thus the automated vehicle 1 can be made to travel automatically through the travel location D.

As the control of the travel control portion 11, the travel portion 3 is controlled such that a difference in speed according to the relationship between the first distance L1 and the second distance L2 (for example, the ratio or difference between the first distance L1 and the second distance L2) is generated between the left and right wheels. However, various types of control, not limited to the above control, can be applied as long as that control can adjust the traveling direction of the automated vehicle 1. For example, the travel control portion 11 can control the travel portion 3 such that a torque difference according to the relationship between the first distance L1 and the second distance L2 is generated between the left and right wheels. Also, the travel control portion 11 can control the steering angle of a steering wheel or the like provided to the automated vehicle 1 according to the relationship between the first distance L1 and the second distance L2.

As regards the travel location of the automated vehicle 1, the travel location D passing through the center point E is exemplified. However, as long as the travel location is between the wireless information tag 2a for travel location identification which is located on the left side and the wireless information tag 2a for travel location identification which is located on the right side, and is an area other than the travel disabled area C1, which is set by the travel disabled area information C stored in each of the wireless information tags 2, what location is set as the travel location can be changed as appropriate.

For example, as illustrated by a dashed-dotted line in FIG. 4, the travel location of the automated vehicle 1 can be set to a travel location (traveling route) G passing through a deviation point F, which is deviated to approximate the wireless information tag 2a for travel location identification which is located more to the left side than the center point E. Also in this case, the travel control portion 11 is aware of the relative position of the automated vehicle 1 with respect to the wireless information tags 2a for travel location identification on both left and right sides. Therefore, by identifying the deviation point F from the relative position, the travel location G can be identified.

The travel control portion 11 performs the following when the relative position of the automated vehicle 1 with respect to the wireless information tags 2a for travel location identification on both left and right sides reaches a point on a line connecting the arrangement positions of the wireless information tags 2a for travel location identification on both left and right sides. That is, by wireless communication between the tag-side communication portion 21 of each of the next coming wireless information tags 2a for travel location identification on both left and right sides in the traveling direction and the vehicle-side communication portion 12, the detection by the distance detecting portion 13 and the detection by the orientation detecting portion 14 are carried out, and the travel control portion 11 ascertains the relative position of the automated vehicle 1 with respect to the next coming wireless information tags 2a for travel location identification on both left and right sides in the traveling direction. Incidentally, as described above, in the traveling direction, as illustrated in FIG. 1, the wireless information tags 2 are arranged at the first predetermined intervals P1 smaller than the communicable range of the wireless information tags 2. Therefore, when the relative position of the automated vehicle 1 reaches a point on a line connecting the arrangement positions of the wireless information tags 2a for travel location identification on both left and right sides, wireless communication between the tag-side communication portion 21 of each of the next coming wireless information tags 2a for travel location identification on both left and right sides in the traveling direction and the vehicle-side communication portion 12 is enabled.

In this way, as the wireless communication is carried out between the tag-side communication portion 21 and the vehicle-side communication portion 12, the travel control portion 11 identifies, from the relative position of the automated vehicle 1 which has been ascertained, the center point E between the next coming wireless information tags 2a for travel location identification on both left and right sides in the traveling direction, to identify the travel location D, and controls the traveling of the automated vehicle 1 such that the automated vehicle 1 travels through the identified travel location D. Each time the relative position of the automated vehicle 1 reaches a point on a line connecting the arrangement positions of the wireless information tags 2a for travel location identification on both left and right sides, the travel control portion 11 switches the wireless information tags 2a for travel location identification for ascertaining the relative position of the automated vehicle 1 to the next coming wireless information tags 2a for travel location identification on both left and right sides in the traveling direction. By doing so, the travel control portion 11 controls the traveling of the automated vehicle 1 so that the automated vehicle 1 travels through the travel location D.

Here, the timing for switching the wireless information tags 2a for travel location identification for ascertaining the relative position of the automated vehicle 1 is not limited to the timing each time the relative position of the automated vehicle 1 reaches the point on the line connecting the arrangement positions of the wireless information tags 2a for travel location identification on both left and right sides. That is, various timings, such as a timing when the communication with the next wireless information tags 2a for travel location identification is enabled, are applicable.

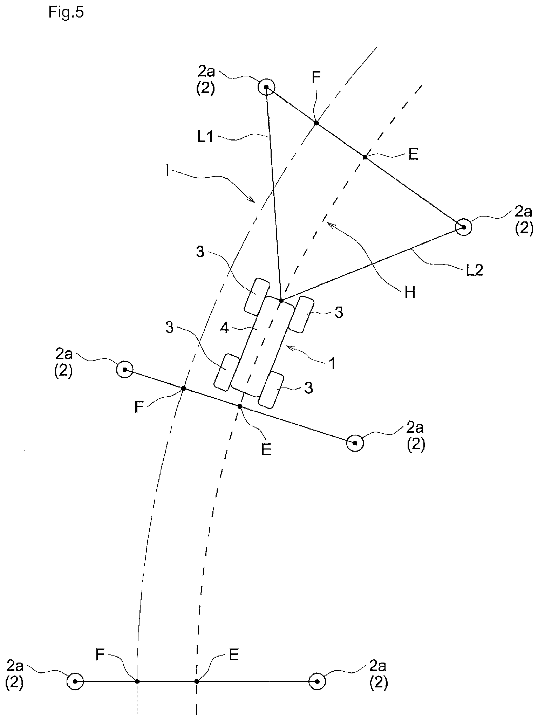

FIG. 4 illustrates an example in which the travel locations D and G of the linear shape passing through the center point E and the deviation point F are set as the travel locations of the automated vehicle 1. However, for example, as illustrated in FIG. 5, as the travel location of the automated vehicle 1, curved travel locations H and I can be set. Also in this case, as the travel location of the automated vehicle 1, the travel location to be set can be set to the travel location H or I passing through the center point E or the deviation point F between the wireless information tags 2a for travel location identification on both left and right sides. Since the control by the travel control portion 11 is the same as that in the case of performing the automatic traveling through the linear travel locations D and G, description thereof is omitted.

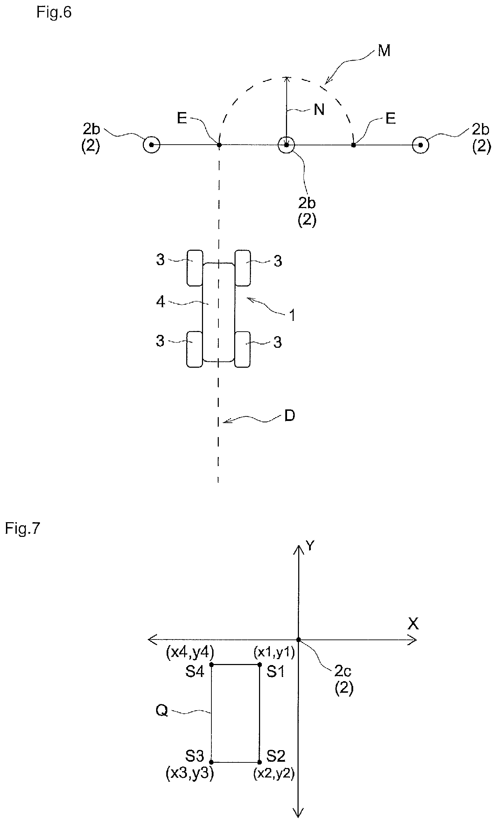

With reference to FIG. 6, etc., a case where the automated vehicle 1 is made to turn and travel will be described.

As illustrated in FIG. 1, the wireless information tag 2 located at the edge portion relative to the arrangement direction (up-down direction in FIG. 1) of the plurality of wireless information tags 2 is set as the wireless information tag 2b for turning. In the wireless information tag 2b for turning, in addition to the address information B and the travel disabled area information C, the turn information J is stored in the tag-side storage portion 22, as illustrated in FIG. 2. The turn information J corresponds to information for enabling the automated vehicle 1 to turn and travel, and is information related to a travel location (traveling route) M and a turning radius N, etc., when the turning traveling is to be performed, as illustrated in FIG. 6, for example. The travel location M is set to an area other than the travel disabled area C1, which is set by the travel disabled area information C stored in the wireless information tag 2b for turning. For example, FIG. 6 illustrates an example in which the travel location M of an arc shape connecting the center point E, which is between the left and right wireless information tags 2b for turning, and the center point E, which is between the next pairing left and right wireless information tags 2b for turning, is set.

The travel control portion 11 acquires the turn information J by wireless communication between the tag-side communication portion 21 of the wireless information tag 2b for turning and the vehicle-side communication portion 12. The travel control portion 11 employs the wireless communication between the tag-side communication portion 21 of the left and right wireless information tags 2b for turning and the vehicle-side communication portion 12. By the wireless communication, the distance detecting portion 13 detects a distance to the automated vehicle 1 relative to the left and right wireless information tags 2b for turning, and the orientation detecting portion 14 detects the orientation of the automated vehicle 1 relative to the left and right wireless information tags 2b for turning. In this way, the travel control portion 11 ascertains the relative position of the automated vehicle 1 with respect to the left and right wireless information tags 2b for turning. Thus, the travel control portion 11 identifies the center point E, which corresponds to a start point of the travel location M of the automated vehicle 1 included in the turn information J, and controls the traveling of the automated vehicle 1 such that the automated vehicle 1 passes through the center point E. When the relative position of the automated vehicle 1 reaches the center point E, the travel control portion 11 controls the travel portion 3 such that the automated vehicle 1 is made to turn and travel at the turning radius N included in the turn information J. Consequently, the travel control portion 11 controls the traveling of the automated vehicle 1 such that the traveling is performed through the travel location M of the automated vehicle 1, and performs the turning traveling of the automated vehicle 1. When the relative position of the automated vehicle 1 reaches the center point E corresponding to an end point of the travel location M of the automated vehicle 1, the travel control portion 11 finishes the turning traveling, and switches the control to the travel control that is realized by communication with the right and left wireless information tags 2a for travel location identification, as described above.

While it is possible for the travel control portion 11 to start the turning traveling directly when the relative position of the automated vehicle 1 reaches the center point E corresponding to the start point of the travel location M, it is also possible to start the turning traveling after stopping the automated vehicle 1 at the center point E for a while. In addition, while it is possible for the travel control portion 11 to switch the control to the travel control that is realized by communication with the wireless information tags 2a for travel location identification directly when the relative position of the automated vehicle 1 reaches the center point E corresponding to the start point of the travel location M, it is also possible to switch the control to the travel control that is realized by communication with the wireless information tags 2a for travel location identification after stopping the automated vehicle 1 at the center point E for a while.

Incidentally, in FIGS. 1 and 6, a pair of left and right wireless information tags 2 located at the edge portion relative to the arrangement direction of the plurality of wireless information tags 2 are employed as the wireless information tags 2b for turning. However, it is possible to employ only the wireless information tag 2 that is located on the side for turning traveling (i.e., the right side in FIGS. 1 and 6), of the pair of left and right wireless information tags 2, as the wireless information tag 2b for turning, to make the automated vehicle 1 turn and travel.

In this way, the travel control portion 11 makes the automated vehicle 1 travel automatically while identifying the travel location (traveling route) using the relative position of the automated vehicle 1 with respect to the wireless information tags 2, which is enabled by communication with the wireless information tags 2a for travel location identification, and communication with the wireless information tags 2b for turning. In the embodiment illustrated in FIG. 1, the automated vehicle 1 is made to automatically travel through the travel location D indicated by the dotted line, for example. By doing so, it is possible to have the automated vehicle 1 travel reciprocatingly along a cultivated line where fruit-bearing trees and crops, which overlap the arrangement positions of the plurality of wireless information tags 2, are cultivated. Thereby, it is possible to perform the spraying work of spraying fertilizers or the like at the places where the fruit-bearing trees and crops are cultivated, and the harvesting work for the fruit-bearing trees and crops, by the automated vehicle 1.

As illustrated in FIG. 1, there may be a case where an obstacle Q exists in the traveling region A. In such a case, it is necessary to make the automated vehicle 1 travel automatically by avoiding the obstacle Q. Accordingly, as illustrated in FIG. 1, the plurality of wireless information tags 2 include a wireless information tag 2c for obstacle in which a relative position of the obstacle Q with respect to the wireless information tag 2c is stored as obstacle information R (see FIG. 2), in addition to the wireless information tag 2a for travel location identification, and the wireless information tag 2b for turning. Among the plurality of wireless information tags 2, the wireless information tag 2 located at a position corresponding to the existing position of the obstacle Q is employed as the wireless information tag 2c for obstacle. In FIG. 1, two wireless information tags 2 that are located near the existing position of the obstacle Q are set as the wireless information tags 2c for obstacle. However, according to where the existing position of the obstacle Q is located, for example, it is possible to change as appropriate which wireless information tag 2 is employed as the wireless information tag 2c for obstacle.

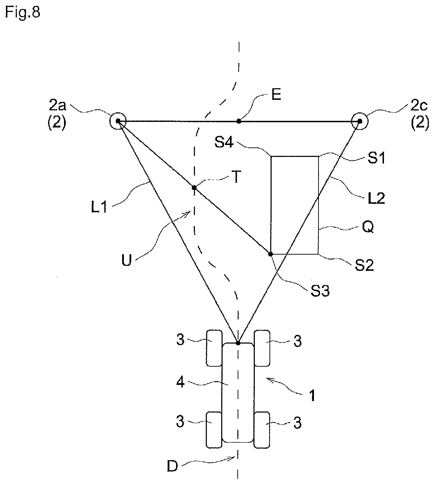

With reference to FIGS. 7 and 8, a case where the automated vehicle 1 is made to travel automatically while avoiding the obstacle Q will be described.

As illustrated in FIG. 2, in the wireless information tag 2c for obstacle, the obstacle information R is stored in the tag-side storage portion 22. Further, as illustrated in FIG. 7, the obstacle information R corresponds to information indicating the relative position of the obstacle Q with respect to the wireless information tag 2c for obstacle. In the example illustrated in FIG. 7, the relative position of the obstacle Q with respect to the wireless information tag 2c for obstacle is represented by X-Y coordinates in which the wireless information tag 2c for obstacle is the reference point (zero point). The obstacle Q exists in an area surrounded by a first edge point S1 (x1, y1), a second edge point S2 (x2, y2), a third edge point S3 (x3, y3), and a fourth edge point S4 (x4, y4). Here, the direction of the Y-coordinate conforms to the direction along the traveling direction of the automated vehicle 1, and the direction of the X-coordinate conforms to the left-right direction orthogonal to the traveling direction of the automated vehicle 1. The relative position of the obstacle Q with respect to the wireless information tag 2c for obstacle is indicated in a state where the directions of the X-Y coordinates correspond to the traveling direction of the automated vehicle 1.

In making the automated vehicle 1 travel automatically, as illustrated in FIG. 8, wireless communication is carried out between the vehicle-side communication portion 12 and the tag-side communication portion 21 of the wireless information tag 2a for travel location identification which is located on the left, and also, the wireless communication is carried out between the vehicle-side communication portion 12 and the tag-side communication portion 21 of the wireless information tag 2c for obstacle which is located on the right. By the above wireless communications, the travel control portion 11 ascertains the relative position of the automated vehicle 1 with respect to the wireless information tag 2a for travel location identification, which is on the left, and the wireless information tag 2c for obstacle, which is on the right, on the basis of distance detection by the distance detecting portion 13, and orientation detection by the orientation detecting portion 14. In addition, by wireless communication between the vehicle-side communication portion 12 and the tag-side communication portion 21 of the wireless information tag 2c for obstacle which is located on the right, the travel control portion 11 acquires the obstacle information R (see FIG. 7) stored in the wireless information tag 2c for obstacle. Therefore, the travel control portion 11 is also aware of the relative position of the obstacle Q with respect to the wireless information tag 2c for obstacle. Consequently, the travel control portion 11 identifies a travel location (traveling route) U for avoiding the obstacle Q, on the basis of the relative position of the automated vehicle 1 with respect to the wireless information tag 2a for travel location identification, which is on the left, and the wireless information tag 2c for obstacle, which is on the right, and the relative position of the obstacle Q with respect to the wireless information tag 2c for obstacle. Further, the travel control portion 11 controls the traveling of the automated vehicle 1 such that the automated vehicle 1 travels through the identified travel location U.

In the example illustrated in FIG. 8, as the travel location U for avoiding the obstacle Q, the travel location U passing through a center point T between the left-side wireless information tag 2a for travel location identification and the third edge point S3 of the obstacle Q is set. The travel location U is the travel location for allowing the automated vehicle 1 to automatically travel continuously from the travel location D between the left-side wireless information tag 2a for travel location identification and the right-side wireless information tag 2c for obstacle. The travel location U causes the traveling to be performed by detouring to the left from the travel location D, for the presence of the obstacle Q, from a place near in the traveling direction as compared to the existing position of the obstacle Q.

As described above, even if the obstacle Q exists in the traveling region A, the wireless information tag 2c for obstacle may be arranged at a position corresponding to the existing position of the obstacle Q. By doing so, the travel control portion 11 can acquire the obstacle information R (see FIG. 7) stored in the wireless information tag 2c for obstacle, and control the traveling of the automated vehicle 1 so as to avoid the obstacle Q.

As the obstacle information R, FIG. 7 illustrates the example in which the relative position of the obstacle Q with respect to the wireless information tag 2c for obstacle is represented by the X-Y coordinates with the wireless information tag 2c for obstacle being reference point (zero point). However, the form in which the obstacle information R is stored can be changed as appropriate.

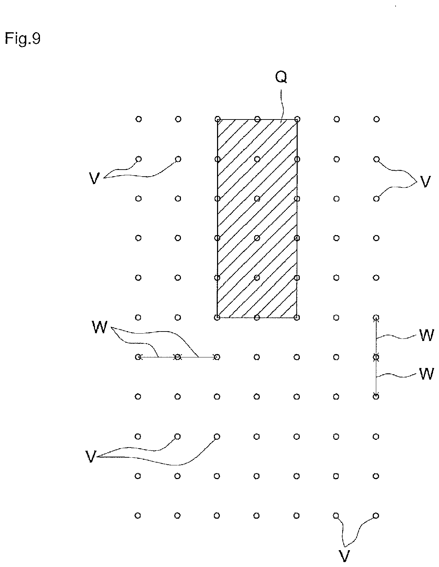

For example, as illustrated in FIG. 9, it is possible to provide a field in which a plurality of dots V are arranged side by side at a constant predetermined interval W in the up-down direction and the left-right direction, and to indicate the existing position of the obstacle Q by the arrangement positions of the dots V on the field. In other words, in FIG. 9, an area surrounded by the arrangement positions of the dots V as indicated by oblique lines corresponds to the existing position of the obstacle Q. Here, the up-down direction in FIG. 9 conforms to the direction along the traveling direction of the automated vehicle 1, and the left-right direction in FIG. 9 conforms to the left-right direction orthogonal to the traveling direction of the automated vehicle 1. The relative position of the obstacle Q with respect to the wireless information tag 2c for obstacle is indicated in a state where the arrangement directions of the plurality of dots V correspond to the traveling direction of the automated vehicle 1.

As described above, as the wireless information tag 2, a plurality of wireless information tags 2 such as the wireless information tag 2a for travel location identification, the wireless information tag 2b for turning, and the wireless information tag 2c for obstacle are exemplified. All of these wireless information tags 2a to 2c are the wireless information tags 2 having a similar configuration. By varying the information to be stored in the tag-side storage portion 22, the wireless information tag 2 is employed as one of the wireless information tag 2a for travel location identification, the wireless information tag 2b for turning, and the wireless information tag 2c for obstacle.

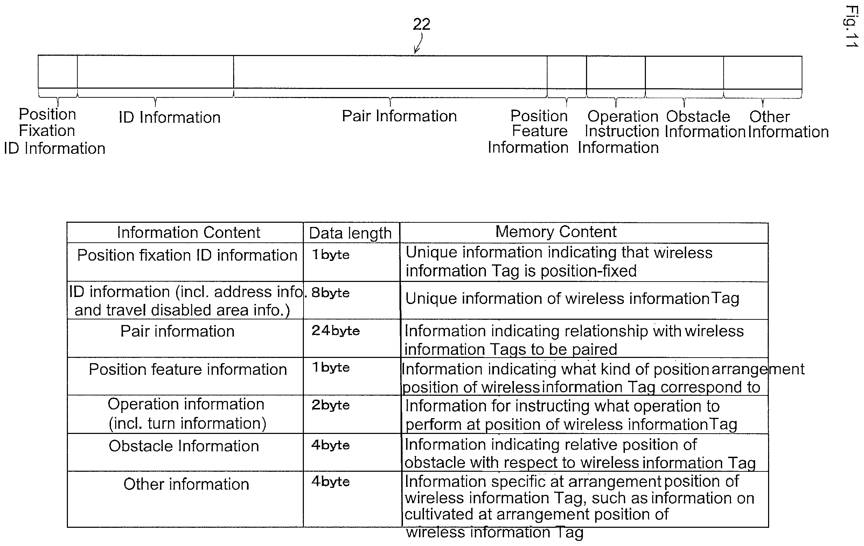

Hence, an example of a format of information to be stored in the tag-side storage portion 22 will be described with reference to FIG. 11. In FIG. 11, storage areas of the tag-side storage portion 22 are illustrated on the upper side, and a table indicating the information stored in each storage area is illustrated on the lower side. By having respective items of information, which are position fixation ID information, ID information, pair information, position feature information, operation instruction information, obstacle information, and the other information, written to the wireless information tag 2 by a writer or the like, the items of information are stored in the predetermined storage areas, respectively, in the tag-side storage portion 22.

As description of each item of information, the position fixation ID information is assumed as unique information indicating that the wireless information tag 2 is position-fixed, and this position fixation ID information is stored in the wireless information tag 2 of which the arrangement position is fixed. The ID information is unique information of the wireless information tag 2, and is assumed as information including the address information B and the travel disabled area information C. The ID information is stored in all of the plurality of wireless information tags 2. The pair information is assumed as information indicating the relationship with the wireless information tags 2 to be paired in the left-right direction with respect to the traveling direction of the automated vehicle 1, and the pair information is stored in the wireless information tag 2a for travel location identification.

The position feature information is assumed as information indicating what kind of position the arrangement position of the wireless information tags 2 corresponds to. The position feature information is assumed as information which is one of information indicating that the position corresponds to the intermediate portion of a linear traveling route along which the automated vehicle 1 is made to travel, information indicating that the position corresponds to the edge portion of the linear traveling route along which the automated vehicle 1 is made to travel, and information indicating that the position corresponds to a corner of the traveling region A, in FIG. 1, for example. Similarly to the ID information, the position feature information can be stored in all of the plurality of wireless information tags 2. The wireless information tag 2 storing the position feature information is assumed as the wireless information tag 2 for position feature. In the present embodiment, all of the wireless information tag 2a for travel location identification, the wireless information tag 2b for turning, and the wireless information tag 2c for obstacle can be employed as the wireless information tag 2 for position feature.

The operation instruction information is assumed as information for instructing the automated vehicle 1 as to what operation to perform at the arrangement position of the wireless information tag 2. The operation position information is assumed as, for example, turn information for enabling the automated vehicle 1 to turn and travel, and information for stopping the automated vehicle 1. The obstacle information R is assumed as information indicating the relative position of the obstacle Q with respect to the wireless information tag 2, as illustrated in FIGS. 7 and 9, and the obstacle information R is stored in the wireless information tag 2c for obstacle. The other information is assumed as information specific at the arrangement position of the wireless information tag 2, such as information on crops cultivated at the arrangement position of the wireless information tag 2. Deciding which wireless information tag 2 can be chosen to store the other information can be selected as appropriate.

By varying the information to be stored in the wireless information tag 2 in this way, a single wireless information tag 2 can be configured as the wireless information tag 2a for travel location identification, the wireless information tag 2b for turning, or the wireless information tag 2c for obstacle. Also, a single wireless information tag 2 can be used as both the wireless information tag 2a for travel location identification and the wireless information tag 2c for obstacle, for example. The information stored in the tag-side storage portion 22 can be rewritten. Thus, for example, by rewriting the information stored in the tag-side storage portion 22, the wireless information tag can be changed from the wireless information tag 2a for travel location identification to the wireless information tag 2b for turning.

### [Other Embodiments]

The other embodiments of the present invention will be explained.

The configurations of the respective embodiments described below are not necessarily applied independently, but may be applied in combination with the configurations of the other embodiments.
(1) In the above embodiment, a plurality of wireless information tags 2 are arranged such that they overlap the cultivated line where the fruit-bearing trees or crops are cultivated. However, it suffices that the arrangement positions of the plurality of wireless information tags 2 are positions corresponding to the travel location (traveling route) through which the automated vehicle 1 is made to travel automatically. That is, how the plurality of wireless information tags 2 can be arranged can be changed as appropriate.
(2) In the above embodiment, the automated vehicle 1 provided with a plurality of wheels as the travel portion 3 has been exemplified. However, as the travel portion 3, a configuration including a pair of left and right crawlers may be employed.
(3) In the above embodiment, by communication between a pair of left and right wireless information tags 2a for travel location identification and the vehicle-side communication portion 12, a relative position of the automated vehicle 1 with respect to the pair of left and right wireless information tags 2a for travel location identification is detected. Further, the travel control portion 11 identifies the travel location (traveling route) E passing through the center point E, for example, by using the relative position of the automated vehicle 1 with respect to the pair of left and right wireless information tags 2a for travel location identification, and controls the traveling of the automated vehicle 1 such that the automated vehicle 1 travels through the travel location E. However, it suffices that the travel control portion 11 controls the traveling of the automated vehicle 1 by using the relative position of the automated vehicle 1 with respect to the wireless information tag 2, which is detected by communication between the wireless information tag 2 and the vehicle-side communication portion 12. In other words, how the automated vehicle 1 is to be controlled by using the relative position of the automated vehicle 1 with respect to the wireless information tag 2 can be changed as appropriate.

For example, as a single wireless information tag 2 and the vehicle-side communication portion 12 communicate with each other, not only can the relative position of the automated vehicle 1 with respect to that wireless information tag 2 be detected, but the travel disabled area information C stored in that wireless information tag 2 can also be acquired. Therefore, the travel control portion 11 controls the traveling of the automated vehicle 1 such that the automated vehicle 1 travels forward while maintaining the traveling direction. Further, it is possible to cause the travel control portion 11 to change the traveling direction of the automated vehicle 1 only when there is a possibility that the automated vehicle 1 may enter the travel disabled area C1, so that the traveling of the automated vehicle 1 can be controlled to avoid the travel disabled area C1. By performing such control, it is possible to allow the automated vehicle 1 to travel forward in an area other than the travel disabled area C1 while preventing entry to the travel disabled area C1.

### INDUSTRIAL APPLICABILITY

The present invention can be applied to various automatic travel systems enabling the automated vehicle to travel automatically.

### DESCRIPTION OF REFERENCE NUMERALS

1 Automated vehicle
2 Wireless information tag
2a Wireless information tag for travel location identification (wireless information tag for position feature)
2b Wireless information tag for turning (wireless information tag for position feature)
2c Wireless information tag for obstacle (wireless information tag for position feature)
11 Travel control portion
12 Vehicle-side communication portion
13 Distance detecting portion (relative position detecting portion)
14 Orientation detecting portion (relative position detecting portion)
J Turn information
Q Obstacle
R Obstacle information

## Claims

1. An automatic travel system comprising:
a plurality of wireless information tags arranged at predetermined positions;
a vehicle-side communication portion provided in an automated vehicle and configured to perform communication with the plurality of wireless information tags;
a relative position detecting portion configured to acquire an orientation to a wireless information tag and a distance to the wireless information tag by communication between the wireless information tag and the vehicle-side communication portion, and detect a relative position with respect to the wireless information tag; and
a travel control portion configured to control traveling of the automated vehicle based on the relative position detected by the relative position detecting portion.

2. The automatic travel system according to claim 1, wherein:
the plurality of wireless information tags include a pair of wireless information tags for travel location identification, which are arranged at an interval in a lateral direction with respect to a traveling direction of the automated vehicle;
the relative position detecting portion detects the relative position with respect to each of the pair of wireless information tags for travel location identification; and
the travel control portion controls the traveling of the automated vehicle to cause the automated vehicle to travel between the pair of wireless information tags for travel location identification, based on the relative position detected by the relative position detecting portion with respect to each of the pair of wireless information tags for travel location identification.

3. The automatic travel system according to claim 2, wherein the travel control portion controls the traveling of the automated vehicle in accordance with a relationship between a distance to one wireless information tag for travel location identification and a distance to another wireless information tag for travel location identification out of the pair of wireless information tags for travel location identification, to cause the automated vehicle to travel between the pair of wireless information tags for travel location identification.

4. The automatic travel system according to any one of claims 1 to 3, wherein:
the plurality of wireless information tags include a wireless information tag for obstacle, in which a relative position of an obstacle with respect to the wireless information tag is stored as obstacle information; and
the travel control portion controls the traveling of the automated vehicle to cause the automated vehicle to avoid the obstacle, based on the obstacle information which is acquired by communication between the wireless information tag for obstacle and the vehicle-side communication portion.

5. The automatic travel system according to any one of claims 1 to 4, wherein:
the plurality of wireless information tags include a wireless information tag for turning storing turn information for making the automated vehicle turn and travel; and
the travel control portion controls the traveling of the automated vehicle based on the turn information which is acquired by communication between the wireless information tag for turning and the communication portion, to cause the automated vehicle to perform turning traveling.

6. The automatic travel system according to any one of claims 1 to 5, wherein the plurality of wireless information tags include a wireless information tag for position feature storing position feature information regarding an arrangement position of the wireless information tag itself.
